# EUROPEAN PATENT SPECIFICATION

(11) **EP 3 092 749 B1**
(45) Date of publication and mention of the grant of the patent: **10.07.2019**
(21) Application number: 15735156.0
(22) Date of filing: 07.01.2015
(51) Int. Cl.: H04L 12/26, H04W 12/12, H04L 29/06, H04L 29/08

(54) **METHOD AND APPARATUS OF IDENTIFYING PROXY IP ADDRESS**
VERFAHREN UND VORRICHTUNG ZUR IDENTIFIKATION VON PROXY-IP-ADRESSEN
PROCÉDÉ ET APPAREIL POUR IDENTIFIER UNE ADRESSE IP DE MANDATAIRE

(30) Priority: 08.01.2014 CN 201410008844
(43) Date of publication of application: 16.11.2016
(73) Proprietor: Alibaba Group Holding Limited, Grand Cayman (KY)
(72) Inventor: HUANG, Mian, Yu Hang District Hangzhou 311121 (CN)
(74) Representative: Barker Brettell LLP
(86) International application number: PCT/US2015/010434
(87) International publication number: WO 2015/105842

(56) References cited:
- WO-A2-2006/100684
- US-A1- 2006 098 586
- US-A1- 2007 192 845
- US-A1- 2009 144 408
- US-A1- 2012 144 493
- US-B1- 7 012 900
- US-B2- 7 937 470
- US-B2- 7 979 694
- John Brozycki: "Detecting and Preventing Anonymous Proxy Usage", , 13 September 2008 (2008-09-13), XP055389231, Retrieved from the Internet: URL:https://www.sans.org/reading-room/whit epapers/detection/detecting-preventing-ano nymous-proxy-usage-32943 [retrieved on 2017-07-10]

## Description

### Technical Field

The present disclosure relates to the field of Internet technologies, and in particular, to methods and apparatuses of identifying a proxy IP address.

### Background

Recently, a widely used application, i.e., a technology of mutually querying an IP (i.e., Internet Protocol) address and a geographical location, exists in the Internet. This technology is broadly applied in various fields of the Internet, and is especially used as a strong risk factor in the field of risk control. In other words, a principle used by the mutual querying technology in a solution of the risk control field includes: determining whether a user has logged in at different geographical locations within a short period of time, and considering as a high-risk operation if affirmative. This determination is valid only when an IP of the user is a true IP. However, the proxy server technology breaks the premise of this application. In other words, a user in Beijing may access the Internet through a proxy server in Hangzhou, and a user IP address as viewed by servers is an address of the Hangzhou proxy server. The present disclosure mainly identifies this type of situation to discern whether a user uses a proxy server. In other words, a determination is made as to whether an IP address is a true IP address of a terminal located at a geographical location or an IP address of a proxy server, for example, an IP address of a VPN (i.e., Virtual Private Network) proxy server.

This problem has been constantly discussed in the Internet field, and some solutions directed to this problem exist in this field. However, these solutions mainly focus in two directions: first, a collection of a proxy server list, which is performed based on extraction by crawlers in the Internet or based on active scanning of proxy servers; and second, a reverse detection, which reversely scans all hosts currently in the Internet to determine whether known proxy port(s) is/are open. A solution of the first idea collects a proxy server list through extraction of proxy servers in the Internet by crawlers. However, information thereof is extremely incomplete as many proxy servers are not published in the Internet or are exploits controlled by hackers. The solution of the second idea is based on reverse detection, with a principle of reverse scanning all IPs to determine whether some common proxy ports are open. However, since the number of active hosts in the Internet is very large and service ports of the proxy servers are not fixed, this solution has a very long scanning cycle.

Therefore, a method capable of quickly and accurately identifying whether an IP address is a proxy IP address is currently desirable.

US2007192845 (A1) discloses the existence of a proxy can be detected by examining a timing differential between handshake messages received at a server used to establish a channel according to a first protocol and the handshake messages used to establish a secondary channel on top of the first protocol (e.g., a secure communications channel). If the time between two handshakes received at the server to set up the secondary channel is greater than the time between two handshakes received at the server to establish the initial channel, the presence of a proxy can be detected.

US2006098586 (A1) discloses a method and system for determining a route of an application in a network. The network includes a number of interconnected nodes, between a source node and a destination node. A sequence of application packets, being transmitted over an application port, are configured to expire at each one of a succession of nodes in the application route. Upon expiration, an error notification is generated by the node according to protocol, and received back at the source node. The error notification identifies the node from which it came, and a collection of error notification identifies the entire route of nodes.

WO2006100684 (A2) discloses a method and system for determining whether a proxy is present in a communication link between a client and a server, and if so, certain characteristics of the proxy.

John Brozycki, "Detecting and Preventing Anonymous Proxy Usage", (20080913), URL: https://www.sans.org/reading-room/whitepapers/detection/detecting-preventing-anonymous-proxy-usage-32943, (20170710), pages 4-33, discloses that many organizations filter the Internet sites that their users may view. They do this for legitimate reasons that include preventing hostile work environments for their users, protecting network assets and data from malicious code or theft, and complying with regulations and company policies. Anonymous proxy services allow users to bypass most filtering systems. Methods organizations may use to detect and prevent anonymous proxy usage are explored.

US2009144408 (A1) discloses methods, apparatus and computer readable code for determining whether a potential relay device is a relay device. In some embodiments, first and second information elements are received from a potential relay device, which is an original source of the second information element. In order to determine whether the potential relay device is a relay device, it is determined whether a feature of an original source of the first information element and a feature of the potential relay device are features unlikely to relate to a single device, wherein a positive result of the determining is indicative that the potential relay device is a relay device. A disclosed system includes an information element receiver and a feature incompatibility analyzer;, The disclosed system may include a feature discovery module, a parameter obtainer and a feature database.

### Summary

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter. The term "techniques," for instance, may refer to device(s), system(s), method(s) and/or computer-readable instructions as permitted by the context above and throughout the present disclosure.

A major objective of the present disclosure is to provide a method of identifying an IP address so as to resolve the above problems in existing technologies.

In one aspect, the present disclosure provides a method implemented by one or more computing devices, the method comprising the steps defined in claim 1. In another aspect, the present disclosure provides an apparatus for identifying a proxy IP address as defined in claim 5. In yet another aspect, the present disclosure provides one or more computer-readable media storing executable instructions that, when executed by one or more processors, cause the one or more processors to perform acts as defined in claim 11. Optional features are defined in the dependent claims.

Compared with the existing technologies, according to the technical solution of the present disclosure, by determining that a ratio between a first network delay (which is between a server and a terminal that establishes a TCP connection with the server using an IP address as a user IP address) and a second network delay (which is between the server and a router that is a hop prior to the IP address) is greater than a threshold, the IP address is identified as a proxy IP address, thus identifying the proxy IP address quickly and accurately.

### Brief Description of Drawings

Accompanying drawings described herein are used for further understanding of the present disclosure and are treated as parts of the present disclosure. Exemplary embodiments and descriptions thereof are used for explaining the present disclosure and should not be construed as limitations to the present disclosure. In the accompanying drawings:
FIG. 1 is a flow chart illustrating a method of identifying a proxy IP address according to an embodiment of the present disclosure.
FIG. 2 is a flow chart of determining a first network delay in a method of identifying a proxy IP address according to an embodiment of the present disclosure.
FIG. 3 is a flow chart of determining a second network delay in a method of identifying a proxy IP address according to an embodiment of the present disclosure.
FIG. 4A is a schematic diagram illustrating a terminal that directly connects to a server through a network according to an embodiment of the present disclosure.
FIG. 4B is a schematic diagram illustrating a terminal that indirectly connects to a server through a proxy according to an embodiment of the present disclosure.
FIG. 5 is a structural diagram illustrating an apparatus of identifying a proxy IP address according to an embodiment of the present disclosure.
FIG. 6 is a structural diagram illustrating the apparatus described in FIG. 5 in further details.

### Detailed Description

A principal idea of the present disclosure is that, by determining a first network delay between a server and a terminal that establishes a TCP connection with the server using an IP address as a user IP address, and determining a second network delay between the server and a router that is one hop prior to the IP address, a determination is made as to whether a ratio between the first network delay and the second network delay is greater than a threshold. If the ratio between the first network delay and the second network delay is greater than the threshold, the IP address is identified as a proxy IP address.

In order to make objectives, technical solutions and advantages of the present disclosure clearer, the technical solutions of the present disclosure are described in a clear and comprehensive manner using example embodiments and corresponding accompanying drawings of the present disclosure. Apparently, the described embodiments represent merely parts of, and not all of, the embodiments of the present disclosure. Based on the embodiments in the present disclosure, all other embodiments derived by one of ordinary skill in the art without creative efforts shall fall within the protection scope of the present disclosure.

According to an embodiment of the present disclosure, a method of identifying a proxy IP address is provided.

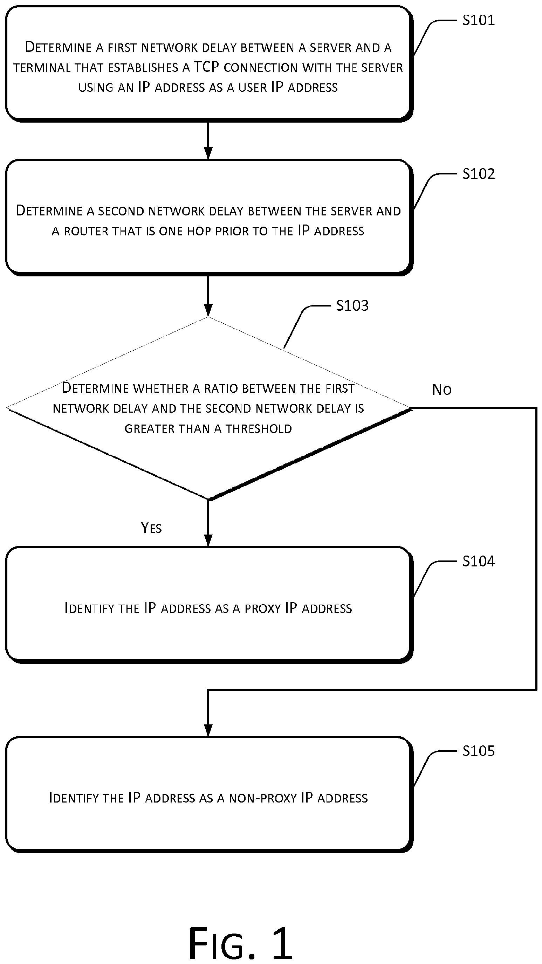

Referring to FIG. 1, FIG. 1 is a flow chart illustrating a method of identifying a proxy IP address according to an embodiment of the present disclosure. As shown in FIG. 1, a first network delay between a server and a terminal that establishes a TCP connection with the server using an IP address as a user IP address is determined at block S101.

In an embodiment, in order to identify whether an IP address is a proxy IP address, a first network delay between a server and a true terminal that attempts to establish a TCP connection with the server using the IP address as a user IP address of the terminal is first needed to be obtained.

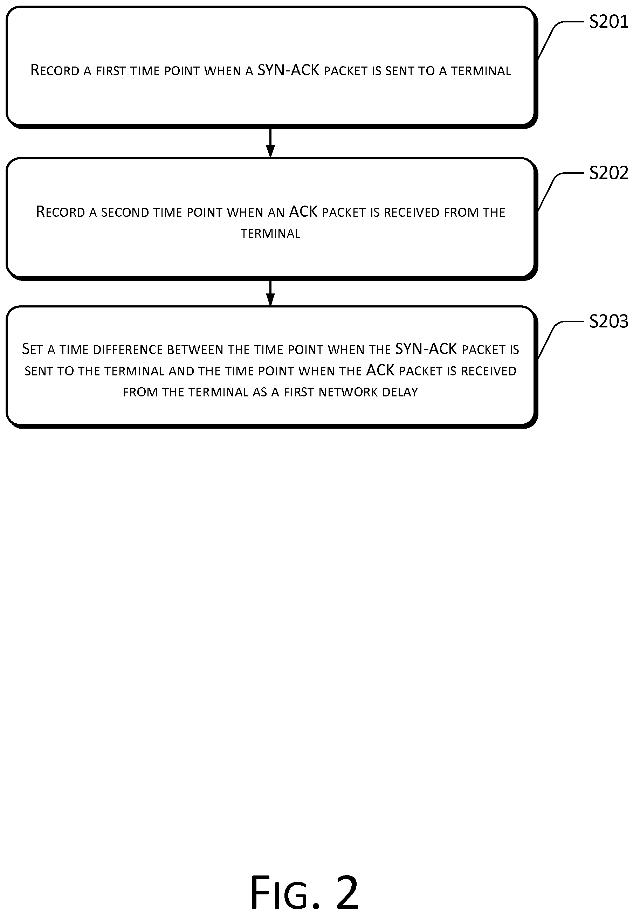

Referring to FIG. 2, a flow chart illustrating an example method of how to obtain a first network delay is described in detail hereinafter.

In order to understand the meaning of the first network delay more clearly, a process of a three-way handshake that is performed between a terminal and a server to establish a TCP connection is introduced first. The three-way handshake, so to speak, refers to a need of sending a total of three packets between a client and a server when establishing a TCP connection. A goal of the three-way handshake is to connect a designated port of the server and to establish a TCP connection. In the first handshake, the terminal sends a TCP packet that includes a SYN (Synchronize Sequence Numbers) flag to the server. This is the first packet in the process of three-way handshake, and is called a SYN packet in the present disclosure. In the second handshake, the server end responds to the terminal, and sends an SYN-ACK packet to the terminal. This is the second packet in the process of three-way handshake. This packet includes an ACK flag and a SYN flag at the same time, thus representing a response to the SYN packet of the client and also marking the SYN for the client to query whether the client is ready for conducting data communication. In the third handshake, the terminal needs to send an ACK packet (i.e., an acknowledgement packet of the three-way handshake) to the server in response. This is the third packet, which represents that the terminal is ready for conducting the data communication. Through this three-way handshake, a TCP connection is established. The present disclosure utilizes a process of three-way handshake of establishing a TCP connection between a terminal and a server in order to obtain a first network delay between sending of a SYN-ACK packet by the server and receiving an ACK packet that is returned from the terminal. Details of how to obtain the first network delay are described hereinafter.

The server receives a SYN packet from the terminal which uses the IP address as the user IP address, and the terminal requests to establish a TCP connection. After receiving the SYN packet, the server sends a SYN-ACK packet to the terminal. As shown in FIG. 2, the server therefore records a time when the SYN-ACK packet is sent to the terminal at block S201. This time may be defined as a first time point, for example.

Thereafter, the server receives an ACK packet from the terminal. The server therefore records a time when the ACK packet is received from the terminal at block S202. This time may be defined as a second time point, for example.

Finally, at block S203, a time difference between the time when the SYN-ACK packet is sent to the terminal and the time when the ACK packet is received from the terminal is determined as the first network delay. In other words, a time difference between the second time point and the first time point is defined as the first network delay.

Through the above method blocks, the first network delay between the server and the terminal may be obtained.

Referring back to FIG. 1, upon determining the first network delay, a second network delay between the server and a router that is one hop prior to the IP address is determined at block S102.

The second network delay is obtained based on the following principle.

The server end may record the user IP address as ip1, and the server end can construct a series of detection packets (for example, 255) having times to live (ttl) being 1 to 255 respectively with a target IP as ip1. According to the TCP/IP protocol, each time when this series of detection packets passes through a router, the ttl is reduced by one. If a target address is not reached even when the ttl is reduced to zero, a router thereof reports an error, and sends an Internet control message protocol (ICMP) error packet to a sender. As such, the last ICMP error packet that is sent by a router one hop prior to the IP address may be known. Therefore, this series of detection packets may be used to obtain an address and a network delay of a previous-hop router associated with a user through analysis.

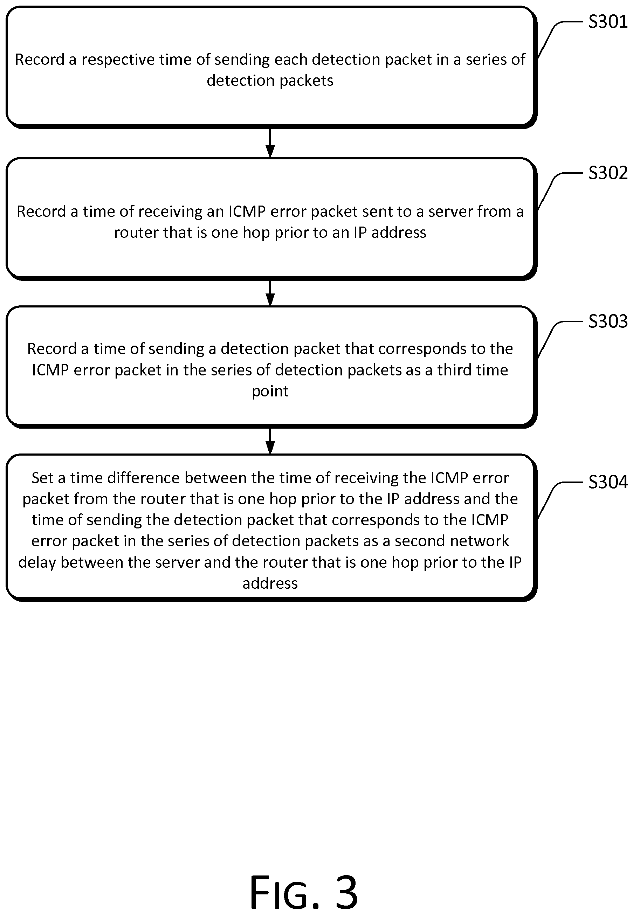

Referring to FIG. 3, a flow chart illustrating an example method of how to obtain a second network delay is described in detail.

As described above, the server constructs and sends a series of detection packets having incremental times to live (TTL) with a target address as the user IP address. For example, a series of 255 detection packets having incremental times to live (TTL) being 1 to 255 with a target IP as the user IP address may be constructed and sent as described above. Therefore, as shown in FIG. 3, a respective time of sending each detection packet in the series of detection packets may be recorded at block S301.

Subsequently, an ICMP error packet sent to the server by a router that is one hop prior to the IP address is obtained based on the series of detection packets. As described above, when a detection packet having the time to live as one in this series of detection packets reaches a first router, for example, a first ICMP error packet is generated and sent because the IP address is not reached. The first ICMP error packet is received by the server, and a time of receiving the first error packet is recorded. By the same token, when a packet having the time to live as n in this series of detection packets reaches the n^{th} router, for example, an n^{th} ICMP error packet is generated and sent because the IP address is not reached. The n^{th} ICMP error packet is received by the server, and a time of receiving the n^{th} error packet is recorded. When a packet having the time to live as n+1 in this series of detection packets reaches the IP address, no ICMP error packet is generated. Therefore, the server knows that the n^{th} router is a router that is one hop prior to the IP address, thereby recording the time of receiving the n^{th} error packet as a time of receiving the ICMP error packet that is sent to the server from the router that is one hop prior to the IP address. In other words, at block S302, the time of receiving the ICMP error packet sent to the server from the router that is one hop prior to the IP address is recorded. For example, this time is defined as a fourth time point.

At block S303, a time of sending a detection packet that corresponds to the ICMP error packet in the series of detection packets is recorded as a third time point. In an embodiment, a detection packet corresponding to the ICMP error packet may be found so that a time of sending this corresponding detection packet is known, and the time of sending that detection packet is defined as the third time point.

At block 304, a time difference between the time of receiving the ICMP error packet from the router that is one hop prior to the IP address and the time of sending the detection packet that corresponds to the ICMP error packet in the series of detection packets is determined as the second network delay between the server and the router that is one hop prior to the IP address.

In other words, a time difference between the fourth time point and the third time point is set as the second network delay.

Return back to FIG. 1, in response to determining the first network delay and the second network delay, at block S103, a determination is made as to whether a ratio between the first network delay and the second network delay is greater than a threshold.

Under a normal situation, if the terminal directly connects to the server using the user IP address of the terminal instead of using a proxy IP address, a value of the first network delay, T1, between the terminal and the server is approximately equal to a value of the second network delay, T2, between the previous-hop router R1 of the user IP address (i.e., the terminal's IP address) and the server. Therefore, the ratio between T1 and T2 is approximately equal to one.

However, if the user uses any proxy server, the so-called "user IP address" detected by the server is a proxy IP address of the proxy server. Therefore, the second network delay that has been determined is a time delay T2' between the server and the previous-hop router of the so-called "user IP address" (which is actually the proxy IP address of the proxy server). A difference between T2' and T1 is large so that a ratio between T1 and T2' is generally greater than a threshold, for example, a threshold that is set to be two. It should be noted that a suitable threshold may be set according to actual needs.

At block S104, if the ratio between the first network delay and the second network delay is greater than the threshold, the IP address is identified as a proxy IP address.

In other words, if the ratio between the first network delay and the second network delay is greater than the threshold, a determination can be made that the IP address is the IP address of terminal because of a large difference between the two delays. The terminal has accessed the server using a proxy IP address of a proxy server, and therefore the IP address is identified as a proxy IP address. Optionally, the proxy server may be a VPN proxy server, and the proxy IP address may be a VPN proxy IP address in the present disclosure.

At block 105, if the ratio between the first network delay and the second network delay is less than or equal to the threshold, the IP address is identified as a non-proxy IP address.

In other words, if the ratio between the first network delay and the second network delay is less than or equal to the threshold, a determination can be made that the IP address is the IP address of the terminal because of a small difference between the two delays, and the terminal has accessed the server without using a proxy IP address. Therefore, the IP address is identified as a non-proxy IP address.

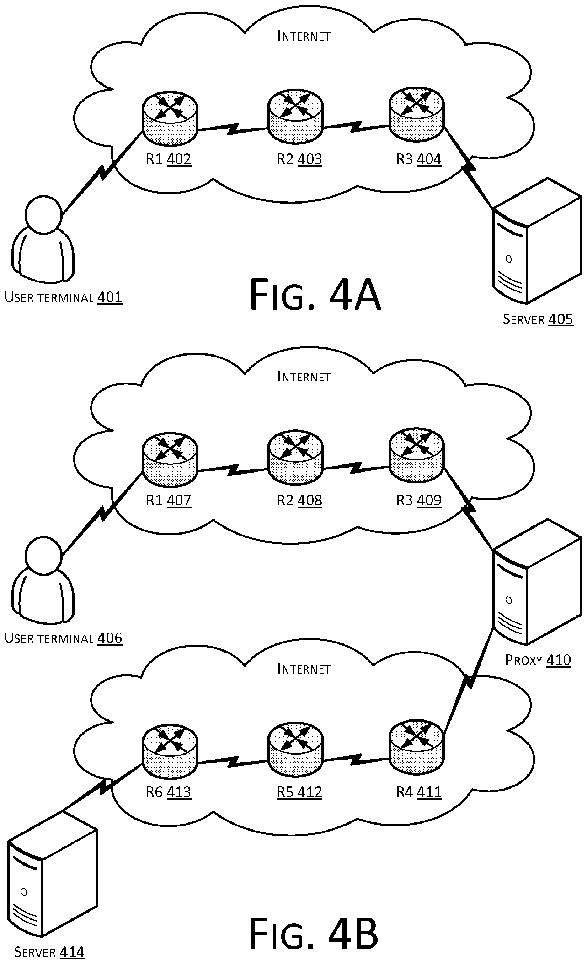

In order to clearly describe technical solutions of the embodiments of the present disclosure, more detailed descriptions are made hereinafter with reference to FIG. 4A and FIG. 4B.

For example, as shown in FIG. 4A, a terminal 401 (a first terminal) of a user located at a certain location A sends an SYN packet. The SYN packet enters a router R1 402 through a cell of the user terminal, for example, passes through a backbone network export, for example, a router R2 403, of the location A, passes through a backbone network export, for example, a router R3 404, of a location B, and finally reaches a server 405, and the server receives the SYN packet. In other words, the server receives the SYN packet from the first terminal which uses a first IP address as a user IP address and attempts to establish a TCP connection with the server. The server sends an SYN-ACK packet to the first terminal, and records a first time point, Time1, of sending the SYN-ACK packet to the first terminal. Thereafter, the server receives an ACK packet from the first terminal, and the server records a second time point, Time2, of receiving the ACK packet from the first terminal. Therefore, a first network delay is determined to be T1=Time2-Time1. As can be seen from FIG. 4A, the network delay T1 includes a delay between the server and the router R3, a delay between the routers R3 and R2, a delay between the routers R2 and R1, and a delay between the router R1 and the first terminal.

In addition, the server may, for example, construct and send a series of 255 detection packets having times to live ttl being 1 to 255 respectively and a target IP address as the first IP address. Therefore, the server may record a sending time of each detection packet in the series of detection packets. As described above, the server may further record a fourth time point, Time4, of receiving an ICMP error packet sent by a previous-hop router of the first IP address (the IP address of the first terminal). Moreover, based on this ICMP error packet, a corresponding detection packet may be found so as to know a sending time of the corresponding detection packet. In other words, a sending time of the detection packet that corresponds to the ICMP error packet in the series of detection packets is defined as a third time point, Time3, for example. Therefore, a second network delay is determined to be T2=Time4-Time3. As can be seen from FIG. 4A, the network delay T2 includes a delay between the server and the router R3, a delay between the routers R3 and R2, and a delay between the routers R2 and R1. In other words, a difference between T1 and T2 is merely the delay between the router and the first terminal, and the difference is relatively small.

As can be seen from the figure, since the first IP address is a true address of the first terminal, the determined values of the obtained T1 and T2 are close to each other, and a ratio between T1 and T2 is not greater than a threshold. Therefore, a determination may be made that the first IP address is not a proxy IP address. As can be seen from the technical solution of the present disclosure, an identification result conforms to an actual result.

Similarly, as shown in FIG. 4B, if a first terminal connects to a server by means of a proxy, a user terminal 406 (the first terminal) located at a certain location A sends an SYN packet. The SYN packet enters a router R1 407 through, for example, a cell of the user terminal 406, passes through a backbone network export, for example, a router R2 408, of the location A, passes through a backbone network export, for example, a router R3 409, of a certain location B, passes through a proxy 410, and enters a router R4 411 through, for example, a cell of the proxy 410, then passes through a backbone network export, for example, a router R5 412, of a certain location C, passes through a backbone network export, for example, a router R6 413, of a certain location D, and finally reaches a server 414. The server receives the SYN packet. In other words, the server receives the SYN packet from the first terminal which uses a second IP address (a proxy IP address) as a user IP address and attempts to establish a TCP connection with the server. The server sends an SYN-ACK packet to the first terminal, and records a first time point, Time1', of sending the SYN-ACK packet to the first terminal. Then, the server receives an ACK packet from the first terminal. The server records a second time point, Time2', of receiving the ACK packet from the first terminal. Therefore, a determination is made that a first network delay is T1'=Time2'-Time1'. As can be seen from FIG. 4B, due to the use of the proxy, the network delay T1' includes a delay between the server and the router R6, a delay between the routers R6 and R5, a delay between the routers R5 and R4, a delay between the router R4 and the proxy, a delay between the proxy and the router R3, a delay between the routers R3 and R2, a delay between the routers R2 and R1, and a delay between the router R1 and the first terminal.

In addition, the server may, for example, construct and send a series of 255 detection packets having times to live ttl being 1 to 255 respectively and a target IP address as the second IP address, so that the server may record a sending time of each detection packet in the series of detection packets. As described above, the server may further record a fourth time point, Time4', of receiving an ICMP error packet sent from a previous-hop router of the second IP address (an IP address of the proxy server instead of the second terminal). Moreover, based on the ICMP error packet, a corresponding detection packet may be found, and so a sending time of the corresponding detection packet can be known.; In other words, a sending time of the detection packet that corresponds to the ICMP error packet in the series of detection packets is defined as a third time point, Time3', for example. As such, a second network delay is determined to be T2'=Time4'-Time3'. As can be seen from FIG. 4B, because of the use of the proxy, the previous-hop router of the second IP address (the proxy IP address) is no longer the router R1 but is changed to the router R4. Therefore, the network delay, T2', includes a delay between the server and the router R6, a delay between the routers R6 and R5, and a delay between the routers R5 and R4. In other words, a difference between T1' and T2' includes the delay between the router R4 and the proxy, the delay between the proxy and the router R3, the delay between the routers R3 and R2, the delay between the routers R2 and R1, and the delay between the router R1 and the first terminal, and the difference is large.

As can be seen from FIG. 4B, since the second IP address is not a true address of the first terminal, the first network delay T1' is much greater than T2'. Therefore, a ratio between T1' and T2' is greater than a threshold. As such, a determination may be made that the second IP address is a proxy IP address and not an IP address of the first terminal. Using the technical solution of the present disclosure, it can be seen that an identification result conforms to an actual result.

The method of identifying a proxy IP address according to the embodiments of the present disclosure has been described through FIG. 1 to FIG. 4B above.

The present disclosure further provides an apparatus of identifying a proxy IP address.

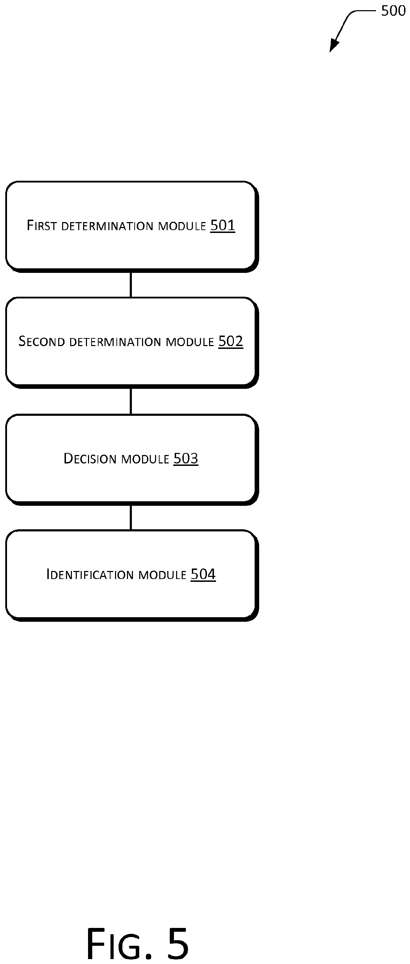

FIG. 5 schematically shows a structural diagram of an apparatus 500 of identifying a proxy IP address according to an embodiment of the present disclosure. According to an embodiment of the present disclosure, the apparatus 500 may include: a first determination module 501, a second determination module 502, a decision module 503 and an identification module 504.

According to the embodiment of the present disclosure, the first determination module 501 may be configured to determine a first network delay between a server and a terminal that establishes a TCP connection with the server using an IP address as a user IP address.

The second determination module 502 may be configured to determine a second network delay between the server and a previous-hop router of the IP address.

The decision module 503 may be configured to determine whether a ratio between the first network delay and the second network delay is greater than a threshold.

The determination module 504 may be configured to identify that the IP address is a proxy IP address when the ratio between the first network delay and the second network delay is greater than the threshold.

The determination module 504 may further be configured to identify that the IP address is a non-proxy IP address when the ratio between the first network delay and the second network delay is less than or equal to the threshold.

According to the embodiment of the present disclosure, the first determination module 501 may be further configured to determine a time difference between a time of sending an SYN-ACK packet to the terminal and a time of receiving an ACK packet from the terminal as a first network delay.

In an embodiment, the first determination module 501 may further include: a first recording sub-module configured to record a first time point when the SYN-ACK packet is sent to the terminal; a second recording sub-module configured to record a second time point that the ACK packet is received from the terminal; and a first determination sub-module configured to determine a time difference between the second time point and the first time point as the first network delay.

According to the embodiment of the present disclosure, the second determination module 502 may be further configured to: determine a time difference between a time of receiving an ICMP error packet from the previous-hop router of the IP address and a time of sending a detection packet that corresponds to the ICMP error packet in a series of detection packets as the second network delay between the server and the previous-hop router of the IP address, wherein the series of detection packets has incremental times to live, and a target address thereof is the user IP address.

In an embodiment, the second determination module may further include: a third recording sub-module configured to record a sending time of each detection packet in the series of detection packets; a fourth recording sub-module configured to record a fourth time point that the ICMP error packet is received from the previous-hop router of the IP address; a first definition sub-module configured to define the sending time of the detection packet that corresponds to the ICMP error packet in the series of detection packets as a third time point; and a second determination sub-module configured to determine a time difference between the fourth time point and the third time point as the second network delay.

The functions implemented by the apparatus of this embodiment are corresponding to the method embodiments as shown in FIG. 1 to FIG. 4B. Therefore, those portions that are not described in detail in this embodiment may be referenced to related descriptions in the above embodiments, and are not redundantly described herein.

In a typical configuration, a computing device includes one or more processors (CPU), an input/output interface, a network interface, and memory.

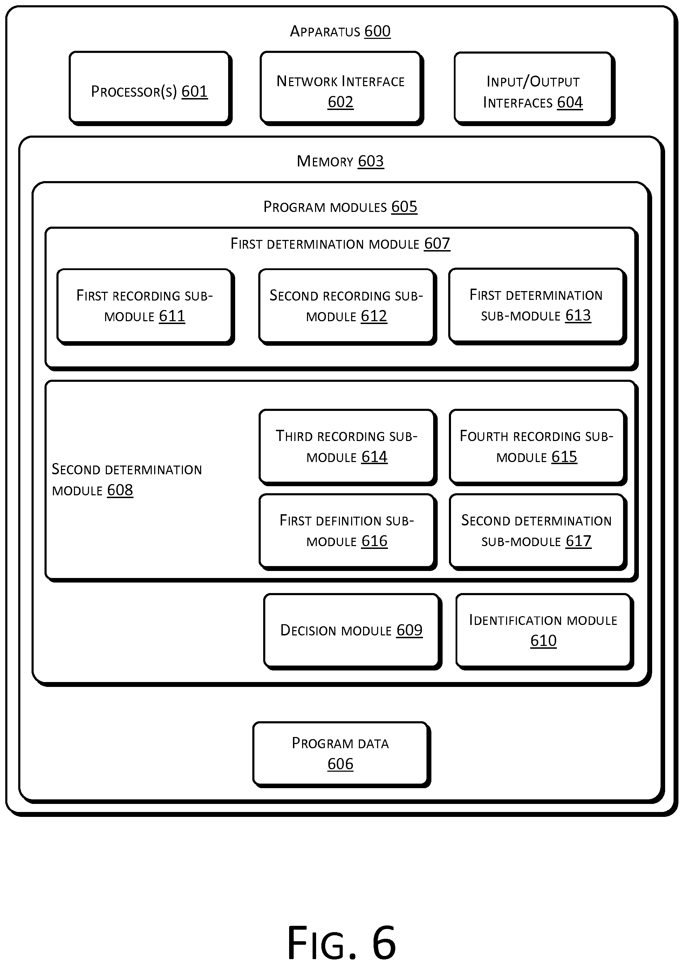

For example, FIG. 6 shows an example apparatus 600, such as the apparatus as described above, in more detail. In an embodiment, the apparatus 600 may include, but is not limited to, one or more processors 601, a network interface 602, memory 603 and an input/output interface 604.

The memory 603 may include a form of computer readable media such as a volatile memory, a random access memory (RAM) and/or a non-volatile memory, for example, a read-only memory (ROM) or a flash RAM. The memory 603 is an example of a computer readable media.

The computer readable media may include a volatile or non-volatile type, a removable or non-removable media, which may achieve storage of information using any method or technology. The information may include a computer-readable command, a data structure, a program module or other data. Examples of computer storage media include, but not limited to, phase-change memory (PRAM), static random access memory (SRAM), dynamic random access memory (DRAM), other types of random-access memory (RAM), read-only memory (ROM), electronically erasable programmable read-only memory (EEPROM), quick flash memory or other internal storage technology, compact disk read-only memory (CD-ROM), digital versatile disc (DVD) or other optical storage, magnetic cassette tape, magnetic disk storage or other magnetic storage devices, or any other non-transmission media, which may be used to store information that may be accessed by a computing device. As defined herein, the computer readable media does not include transitory media, such as modulated data signals and carrier waves.

The memory 603 may include program modules 605 and program data 606. In one embodiment, the program modules 605 may include a first determination module 607, a second determination module 608, a decision module 609 and an identification module 610. In some embodiments, the first determination module 607 may include a first recording sub-module 611, a second recording sub-module 612 and/or a first determination sub-module 613. Additionally, in one embodiment, the second determination module 608 may include a third recording sub-module 614, a fourth recording sub-module 615, a first definition sub-module 616 and/or a second determination sub-module 617. Details of these modules and sub-modules may be found in the foregoing description and are therefore not redundantly described herein.

It should be noted that the terms "comprise", "include" or any other variations thereof are meant to cover the non-exclusive inclusions. The process, method, product or apparatus that includes a series of elements not only includes those elements, but also includes other elements that are not explicitly listed, or further includes elements that already existed in such process, method, product or apparatus. In a condition without further limitations, an element defined by the phrase "include one ..." does not exclude any other similar elements from existing in the process, method, product or apparatus.

A person with ordinary skill in the art should understand that the embodiments of the present disclosure can be provided as a method, a system or a product of a computer program. Therefore, the present disclosure can be implemented as an embodiment of only hardware, an embodiment of only software or an embodiment of a combination of hardware and software. Moreover, the present disclosure can be implemented as a product of a computer program that can be stored in one or more computer readable storage media (which includes but is not limited to, a magnetic disk, a CD-ROM or an optical disk, etc.) that store computer-executable instructions.

The above description merely describes the embodiments of the present disclosure, which are not intended to limit the scope of the present disclosure. Various modifications and alternations can be made to the present disclosure by a person with ordinary skill in the art.

## Claims

1. A method implemented by one or more computing devices, the method comprising:
determining (S101) a first network delay between a server and a terminal that establishes a Transmission Control Protocol, TCP, connection with the server using an Internet Protocol, IP, address as a user IP address;
determining (S102) a second network delay using the user IP address received at the server for establishing the TCP connection, the second network delay being between the server and a router that is one hop prior to the user IP address received at the server, wherein the user IP address received at the server for establishing the TCP connection is used as a target address in a series of detection packets having incremental times to live constructed and sent from the server;
determining (S103) whether a ratio between the first network delay and the second network delay is greater than a threshold; and
identifying (S104, S105) the user IP address as a proxy IP address or a non-proxy IP address based on a result of the determining of whether the ratio between the first network delay and the second network delay is greater than the threshold.

2. The method of claim 1, wherein identifying the user IP address as a proxy IP address or a non-proxy IP address based on a result of the determining of whether ratio between the first network delay and the second network delay is greater than the threshold comprises:
a) identifying (S104) the user IP address as the proxy IP address in response to determining that the ratio between the first network delay and the second network delay is greater than the threshold; or
b) identifying (S105) the user IP address as the non-proxy IP address in response to determining that the ratio between the first network delay and the second network delay is less than or equal to the threshold.

3. The method of claim 1 or claim 2, wherein determining (S101) the first network delay comprises:
a) determining a time difference between a time of sending an SYN-ACK packet to the terminal and a time of receiving an ACK packet from the terminal as a first network delay; or
b) recording (S201) a first time point of sending the SYN-ACK packet to the terminal;
recording (S202) a second time point of receiving the ACK packet from the terminal; and
determining (S203) a time difference between the second time point and the first time point as the first network delay.

4. The method of any preceding claim, wherein determining (S102) the second network delay comprises:
a) determining a time difference between a time of receiving an Internet control message protocol, ICMP, error packet from the router that is one hop prior to the user IP address and a time of sending a detection packet that corresponds to the ICMP error packet as the second network delay; or
b) recording (S301) a time of sending each detection packet in the series of detection packets;
recording (S302) a fourth time point of receiving an Internet control message protocol, ICMP, error packet from the router that is one hop prior to the user IP address;
defining (S303) the time of sending a detection packet that corresponds to the ICMP error packet as a third time point; and
determining (S304) a time difference between the fourth time point and the third time point as the second network delay.

5. An apparatus (600) for identifying a proxy IP address, comprising:
one or more processors (601);
memory (603);
a first determination module (607) stored in the memory and executable by the one or more processors, the first determination module (607) configured to, when executed by the one or more processors, determine a first network delay between a server and a terminal that establish a Transmission Control Protocol, TCP, connection with the server using an Internet Protocol, IP, address as a user IP address;
a second determination module (608) stored in the memory and executable by the one or more processors, the second determination module (608) configured to, when executed by the one or more processors, determine a second network delay using the user IP address received at the server for establishing the TCP connection, the second network delay being between the server and a router that is a hop prior to the user IP address received at the server, wherein the user IP address received at the server for establishing the TCP connection is used as a target address in a series of detection packets having incremental times to live constructed and sent from the server;
a decision module (609) stored in the memory and executable by the one or more processors, the decision module (609) configured to, when executed by the one or more processors, determine whether a ratio between the first network delay and the second network delay is greater than a threshold; and
an identification module (610) stored in the memory and executable by the one or more processors, the identification module (610) configured to, when executed by the one or more processors, identify the user IP address as a proxy IP address or a non-proxy IP address based on a result of the determination of whether the ratio between the first network delay and the second network delay is greater than the threshold.

6. The apparatus of claim 5, wherein the identification module (610) is configured to, when executed by the one or more processors, identify the user IP address:
a) as the proxy IP address in response to determining that the ratio between the first network delay and the second network delay is greater than the threshold; or
b) the non-proxy IP address in response to determining that the ratio between the first network delay and the second network delay is less than or equal to the threshold.

7. The apparatus of claim 5 or claim 6, wherein the first determination module (607) is further configured to, when executed by the one or more processors, determine a time difference between a time of sending an SYN-ACK packet to the terminal and a time of receiving an ACK packet from the terminal as a first network delay.

8. The apparatus of any one of claims 5 to 7, wherein the first determination module (607) further comprises:
a first recording sub-module (611) configured to, when executed by the one or more processors, record a first time point of sending the SYN-ACK packet to the terminal;
a second recording sub-module (612) configured to, when executed by the one or more processors, record a second time point of receiving the ACK packet from the terminal; and
a first determination sub-module (613) configured to, when executed by the one or more processors, determine a time difference between the second time point and the first time point as the first network delay.

9. The apparatus of any one of claims 5 to 8, wherein the second determination module (608) is further configured to, when executed by the one or more processors, determine a time difference between a time of receiving an Internet control message protocol, ICMP, error packet from the router that is one hop prior to the IP address and a time of sending a detection packet that corresponds to the ICMP error packet in the series of detection packets as the second network delay between the server and the router that is one hop prior to the IP address.

10. The apparatus of any one of claims 5 to 9, wherein the second determination module (608) further comprises:
a third recording sub-module (614) configured to, when executed by the one or more processors, record a time of sending each detection packet in the series of detection packets;
a fourth recording sub-module (615) configured to, when executed by the one or more processors, record a fourth time point of receiving an Internet control message protocol, ICMP, error packet from the router that is one hop prior to the IP address;
a first definition sub-module (616) configured to, when executed by the one or more processors, define the time of sending the detection packet that corresponds to the ICMP error packet in the series of detection packets as a third time point; and
a second determination sub-module (617) configured to, when executed by the one or more processors, determine a time difference between the fourth time point and the third time point as the second network delay.

11. One or more computer-readable media storing executable instructions that, when executed by one or more processors, cause the one or more processors to perform acts comprising:
determining (S101) a first network delay between a server and a terminal that establishes a Transmission Control Protocol, TCP, connection with the server using an Internet Protocol (IP) address as a user IP address;
determining (S102) a second network delay using the user IP address received at the server for establishing the TCP connection, the second network delay being between the server and a router that is one hop prior to the user IP address received at the server, wherein the user IP address received at the server for establishing the TCP connection is used as a target address in a series of detection packets having incremental times to live constructed and sent from the server;
determining (S103) whether a ratio between the first network delay and the second network delay is greater than a threshold; and
identifying (S104, S105) the user IP address as a proxy IP address in response to determining that the ratio between the first network delay and the second network delay is greater than the threshold.

12. The one or more computer-readable media of claim 11, wherein determining (S101) the first network delay comprises determining a time difference between a time of sending an SYN-ACK packet to the terminal and a time of receiving an ACK packet from the terminal as a first network delay.

13. The one or more computer-readable media of claim 11 or claim 12, wherein determining (S101) the first network delay comprises:
recording (S201) a first time point of sending the SYN-ACK packet to the terminal;
recording (S202) a second time point of receiving the ACK packet from the terminal; and
determining (S203) a time difference between the second time point and the first time point as the first network delay.

14. The one or more computer-readable media of any one of claims 11 to 13, wherein determining (S102) the second network delay comprises determining a time difference between a time of receiving an Internet control message protocol, ICMP, error packet from the router that is one hop prior to the user IP address and a time of sending a detection packet that corresponds to the ICMP error packet as the second network delay, wherein the series of detection packets comprise the ICMP error packet.

15. The one or more computer-readable media of any one of claims 11 to 13, wherein determining (S102) the second network delay comprises:
recording (S301) a time of sending each detection packet in the series of detection packets;
recording (S302) a fourth time point of receiving an Internet control message protocol, ICMP, error packet from the router that is one hop prior to the user IP address;
defining (S303) the time of sending a detection packet that corresponds to the ICMP error packet as a third time point; and
determining (S304) a time difference between the fourth time point and the third time point as the second network delay.

## Patentansprüche

1. Verfahren, das durch eine oder mehrere Rechenvorrichtungen implementiert ist, wobei das Verfahren umfasst:
Bestimmen (S101) einer ersten Netzwerkverzögerung zwischen einem Server und einem Endgerät, das eine Übertragungssteuerungsprotokoll-, TCP-, Verbindung mit dem Server unter Verwendung einer Internetprotokoll-, IP-, Adresse als Benutzer-IP-Adresse herstellt;
Bestimmen (S102) einer zweiten Netzwerkverzögerung unter Verwendung der auf dem Server empfangenen Benutzer-IP-Adresse zum Herstellen der TCP-Verbindung, wobei die zweite Netzwerkverzögerung zwischen dem Server und einem Router liegt, der sich einen Hop vor der auf dem Server empfangenen Benutzer-IP-Adresse befindet, wobei die auf dem Server zum Herstellen der TCP-Verbindung empfangene Benutzer-IP-Adresse als Zieladresse in einer Reihe von Erkennungspaketen, die inkrementelle Lebenszeiten aufweisen, verwendet wird, die von dem Server aufgebaut und gesendet werden;
Bestimmen (S103), ob ein Verhältnis zwischen der ersten Netzwerkverzögerung und der zweiten Netzwerkverzögerung größer als ein Schwellenwert ist; und
Identifizieren (S104, S105) der Benutzer-IP-Adresse als eine Proxy-IP-Adresse oder eine Nicht-Proxy-IP-Adresse basierend auf einem Ergebnis des Bestimmens, ob das Verhältnis zwischen der ersten Netzwerkverzögerung und der zweiten Netzwerkverzögerung größer als der Schwellenwert ist.

2. Verfahren nach Anspruch 1, wobei das Identifizieren der Benutzer-IP-Adresse als eine Proxy-IP-Adresse oder eine Nicht-Proxy-IP-Adresse basierend auf einem Ergebnis des Bestimmens ob das Verhältnis zwischen der ersten Netzwerkverzögerung und der zweiten Netzwerkverzögerung größer als der Schwellenwert ist umfasst:
a) Identifizieren (S104) der Benutzer-IP-Adresse als Proxy-IP-Adresse als Reaktion auf das Bestimmen, dass das Verhältnis zwischen der ersten Netzwerkverzögerung und der zweiten Netzwerkverzögerung größer als der Schwellenwert ist; oder
b) Identifizieren (S105) der Benutzer-IP-Adresse als Nicht-Proxy-IP-Adresse als Reaktion auf das Bestimmen, dass das Verhältnis zwischen der ersten Netzwerkverzögerung und der zweiten Netzwerkverzögerung kleiner als oder gleich dem Schwellenwert ist.

3. Verfahren nach Anspruch 1 oder Anspruch 2, wobei das Bestimmen (S101) der ersten Netzwerkverzögerung umfasst:
a) Bestimmen einer Zeitdifferenz zwischen einer Zeit des Sendens eines SYN-ACK-Pakets an das Endgerät und einer Zeit des Empfangens eines ACK-Pakets von dem Endgerät als erste Netzwerkverzögerung; oder
b) Aufzeichnen (S201) eines ersten Zeitpunktes des Sendens des SYN-ACK-Pakets an das Endgerät;
Aufzeichnen (S202) eines zweiten Zeitpunkts des Empfangens des ACK-Pakets von dem Endgerät; und
Bestimmen (S203) einer Zeitdifferenz zwischen dem zweiten Zeitpunkt und dem ersten Zeitpunkt als erste Netzwerkverzögerung.

4. Verfahren nach einem der vorstehenden Ansprüche, wobei das Bestimmen (S102) der zweiten Netzwerkverzögerung umfasst:
a) Bestimmen einer Zeitdifferenz zwischen einer Zeit des Empfangens eines Internet-Steuernachrichtenprotokoll-, ICMP-, Fehlerpakets von dem Router, der sich einen Hop vor der Benutzer-IP-Adresse befindet, und einer Zeit des Sendens eines Erkennungspakets, das dem ICMP-Fehlerpaket entspricht, als zweite Netzwerkverzögerung; oder
b) Aufzeichnen (S301) einer Zeit des Sendens jedes Erkennungspakets in der Reihe der Erkennungspakete;
Aufzeichnen (S302) eines vierten Zeitpunkts des Empfangens eines Internet-Steuernachrichtenprotokoll-, ICMP-, Fehlerpakets von dem Router, der sich einen Hop vor der Benutzer-IP-Adresse befindet;
Definieren (S303) des Zeitpunktes des Sendens eines Erkennungspakets, das dem ICMP-Fehlerpaket entspricht, als dritten Zeitpunkt; und
Bestimmen (S304) einer Zeitdifferenz zwischen dem vierten Zeitpunkt und dem dritten Zeitpunkt als zweite Netzwerkverzögerung.

5. Vorrichtung (600) zum Identifizieren einer Proxy-IP-Adresse, umfassend:
einen oder mehrere Prozessoren (601);
Speicher (603);
ein erstes Bestimmungsmodul (607), das im Speicher gespeichert und von dem einem oder den mehreren Prozessoren ausführbar ist, wobei das erste Bestimmungsmodul (607) konfiguriert ist, um, wenn es von dem einen oder den mehreren Prozessoren ausgeführt wird, eine erste Netzwerkverzögerung zwischen einem Server und einem Endgerät zu bestimmen, das eine Übertragungssteuerungsprotokoll-, TCP-, Verbindung mit dem Server unter Verwendung einer Internetprotokoll-, IP-, Adresse als Benutzer-IP-Adresse herstellt;
ein zweites Bestimmungsmodul (608), das im Speicher gespeichert und von dem einem oder den mehreren Prozessoren ausführbar ist, wobei das zweite Bestimmungsmodul (608) konfiguriert ist, um, wenn es von dem einen oder den mehreren Prozessoren ausgeführt wird, eine zweite Netzwerkverzögerung unter Verwendung der am Server empfangenen Benutzer-IP-Adresse zum Herstellen der TCP-Verbindung zu bestimmen, wobei die zweite Netzwerkverzögerung zwischen dem Server und einem Router liegt, der sich einen Hop vor der am Server empfangenen Benutzer-IP-Adresse befindet, wobei die am Server zum Herstellen der TCP-Verbindung empfangene Benutzer-IP-Adresse als Zieladresse in einer Reihe von Erkennungspaketen, die inkrementelle Lebenszeiten aufweisen, verwendet wird, die von dem Server konstruiert und gesendet werden;
ein Entscheidungsmodul (609), das im Speicher gespeichert und von dem einem oder den mehreren Prozessoren ausführbar ist, wobei das Entscheidungsmodul (609) konfiguriert ist, um bei Ausführung durch den einen oder die mehreren Prozessoren zu bestimmen, ob ein Verhältnis zwischen der ersten Netzwerkverzögerung und der zweiten Netzwerkverzögerung größer als ein Schwellenwert ist; und
ein Identifikationsmodul (610), das im Speicher gespeichert und von den einem oder den mehreren Prozessoren ausführbar ist, wobei das Identifikationsmodul (610) konfiguriert ist, um, wenn es von dem einem oder den mehreren Prozessoren ausgeführt wird, die Benutzer-IP-Adresse als eine Proxy-IP-Adresse oder eine Nicht-Proxy-IP-Adresse basierend auf dem Ergebnis der Bestimmung, ob das Verhältnis zwischen der ersten Netzwerkverzögerung und der zweiten Netzwerkverzögerung größer als der Schwellenwert ist, zu identifizieren.

6. Vorrichtung nach Anspruch 5, wobei das Identifikationsmodul (610) konfiguriert ist, um, wenn es von dem einem oder den mehreren Prozessoren ausgeführt wird, die Benutzer-IP-Adresse zu identifizieren:
a) als Proxy-IP-Adresse als Reaktion auf das Bestimmen, dass das Verhältnis zwischen der ersten Netzwerkverzögerung und der zweiten Netzwerkverzögerung größer als der Schwellenwert ist; oder
b) die Nicht-Proxy-IP-Adresse als Reaktion auf das Bestimmen, dass das Verhältnis zwischen der ersten Netzwerkverzögerung und der zweiten Netzwerkverzögerung kleiner als oder gleich dem Schwellenwert ist.

7. Vorrichtung nach Anspruch 5 oder Anspruch 6, wobei das erste Bestimmungsmodul (607) weiterhin konfiguriert ist, um, wenn es von dem einem oder den mehreren Prozessoren ausgeführt wird, eine Zeitdifferenz zwischen einer Zeit des Sendens eines SYN-ACK-Pakets an das Endgerät und einer Zeit des Empfangens eines ACK-Pakets von dem Endgerät als erste Netzwerkverzögerung zu bestimmen.

8. Vorrichtung nach einem der Ansprüche 5 bis 7, wobei das erste Bestimmungsmodul (607) weiterhin umfasst:
ein erstes Aufzeichnungs-Submodul (611), das konfiguriert ist, um, wenn es von dem einem oder den mehreren Prozessoren ausgeführt wird, einen ersten Zeitpunkt des Sendens des SYN-ACK-Pakets an das Endgerät aufzuzeichnen;
ein zweites Aufzeichnungs-Submodul (612), das konfiguriert ist, um, wenn es von dem einem oder den mehreren Prozessoren ausgeführt wird, einen zweiten Zeitpunkt des Empfangens des ACK-Pakets von dem Endgerät aufzuzeichnen; und
ein erstes Bestimmungs-Submodul (613), das konfiguriert ist, um, wenn es von dem einem oder den mehreren Prozessoren ausgeführt wird, eine Zeitdifferenz zwischen dem zweiten Zeitpunkt und dem ersten Zeitpunkt als erste Netzwerkverzögerung zu bestimmen.

9. Vorrichtung nach einem der Ansprüche 5 bis 8, wobei das zweite Bestimmungsmodul (608) weiterhin konfiguriert ist, um, wenn es von dem einem oder den mehreren Prozessoren ausgeführt wird, eine Zeitdifferenz zwischen einer Zeit des Empfangens eines Internet-Steuernachrichtenprotokoll-, ICMP-, Fehlerpakets von dem Router, der sich einen Hop vor der IP-Adresse befindet, und einer Zeit des Sendens eines Erkennungspakets, das dem ICMP-Fehlerpaket in der Reihe von Erkennungspaketen entspricht, als zweite Netzwerkverzögerung zwischen dem Server und dem Router, der sich einen Hop vor der IP-Adresse befindet, zu bestimmen.

10. Vorrichtung nach einem der Ansprüche 5 bis 9, wobei das zweite Bestimmungsmodul (608) weiterhin umfasst:
ein drittes Aufzeichnungs-Submodul (614), das konfiguriert ist, um, wenn es von dem einem oder den mehreren Prozessoren ausgeführt wird, eine Zeit des Sendens jedes Erkennungspakets in der Reihe der Erkennungspakete aufzuzeichnen;
ein viertes Aufzeichnungs-Submodul (615), das konfiguriert ist, um, wenn es von dem einem oder den mehreren Prozessoren ausgeführt wird, einen vierten Zeitpunkt des Empfangens eines Internet-Steuerungsnachrichtenprotokoll-, ICMP-, Fehlerpakets von dem Router aufzuzeichnen, der sich einen Hop vor der IP-Adresse befindet;
ein erstes Definitions-Submodul (616), das konfiguriert ist, um, wenn es von dem einem oder den mehreren Prozessoren ausgeführt wird, die Sendezeit des Erkennungspakets, das dem ICMP-Fehlerpaket in der Reihe der Erkennungspakete entspricht, als dritten Zeitpunkt zu definieren; und
ein zweites Bestimmungs-Submodul (617), das konfiguriert ist, um, wenn es von dem einem oder den mehreren Prozessoren ausgeführt wird, eine Zeitdifferenz zwischen dem vierten Zeitpunkt und dem dritten Zeitpunkt als zweite Netzwerkverzögerung zu bestimmen.

11. Ein oder mehrere computerlesbare Medien, die ausführbare Anweisungen speichern, die, wenn sie von einem oder mehreren Prozessoren ausgeführt werden, bewirken, dass der eine oder die mehreren Prozessoren Handlungen ausführen, die umfassen:
Bestimmen (S101) einer ersten Netzwerkverzögerung zwischen einem Server und einem Endgerät, das eine Verbindung mit dem Server über ein Übertragungssteuerungsprotokoll, TCP, unter Verwendung einer Internetprotokoll(IP)-Adresse als Benutzer-IP-Adresse herstellt;
Bestimmen (S102) einer zweiten Netzwerkverzögerung unter Verwendung der auf dem Server empfangenen Benutzer-IP-Adresse zum Herstellen der TCP-Verbindung, wobei die zweite Netzwerkverzögerung zwischen dem Server und einem Router liegt, der sich einen Hop vor der auf dem Server empfangenen Benutzer-IP-Adresse befindet, wobei die auf dem Server zum Herstellen der TCP-Verbindung empfangene Benutzer-IP-Adresse als Zieladresse in einer Reihe von Erkennungspaketen, die inkrementelle Lebenszeiten aufweisen, verwendet wird, die von dem Server aufgebaut und gesendet werden;
Bestimmen (S103), ob ein Verhältnis zwischen der ersten Netzwerkverzögerung und der zweiten Netzwerkverzögerung größer als ein Schwellenwert ist; und
Identifizieren (S104, S105) der Benutzer-IP-Adresse als Proxy-IP-Adresse als Reaktion auf das Bestimmen, dass das Verhältnis zwischen der ersten Netzwerkverzögerung und der zweiten Netzwerkverzögerung größer als der Schwellenwert ist.

12. Ein oder mehrere computerlesbare Medien nach Anspruch 11, wobei das Bestimmen (S101) der ersten Netzwerkverzögerung das Bestimmen einer Zeitdifferenz zwischen einer Zeit des Sendens eines SYN-ACK-Pakets an das Endgerät und einer Zeit des Empfangens eines ACK-Pakets von dem Endgerät als erste Netzwerkverzögerung umfasst.

13. Ein oder mehrere computerlesbare Medien nach Anspruch 11 oder Anspruch 12, wobei das Bestimmen (S101) der ersten Netzwerkverzögerung umfasst:
Aufzeichnen (S201) eines ersten Zeitpunkts des Sendens des SYN-ACK-Pakets an das Endgerät;
Aufzeichnen (S202) eines zweiten Zeitpunkts des Empfangens des ACK-Pakets von dem Endgerät; und
Bestimmen (S203) einer Zeitdifferenz zwischen dem zweiten Zeitpunkt und dem ersten Zeitpunkt als erste Netzwerkverzögerung.

14. Ein oder mehrere computerlesbare Medien nach einem der Ansprüche 11 bis 13, wobei das Bestimmen (S102) der zweiten Netzwerkverzögerung das Bestimmen einer Zeitdifferenz zwischen einer Zeit des Empfangens eines Internet-Steuernachrichtenprotokoll-, ICMP-, Fehlerpakets von dem Router, der sich einen Hop vor der Benutzer-IP-Adresse befindet, und einer Zeit des Sendens eines Erkennungspakets, das dem ICMP-Fehlerpaket entspricht, als zweite Netzwerkverzögerung umfasst, wobei die Reihe von Erkennungspaketen das ICMP-Fehlerpaket umfasst.

15. Ein oder mehrere computerlesbare Medien nach einem der Ansprüche 11 bis 13, wobei das Bestimmen (S102) der zweiten Netzwerkverzögerung umfasst:
Aufzeichnen (S301) einer Zeit des Sendens jedes Erkennungspakets in der Reihe der Erkennungspakete;
Aufzeichnen (S302) eines vierten Zeitpunkts des Empfangens eines Internet-Steuernachrichtenprotokoll-, ICMP-, Fehlerpakets von dem Router, der sich einen Hop vor der Benutzer-IP-Adresse befindet;
Definieren (S303) des Zeitpunktes des Sendens eines Erkennungspakets, das dem ICMP-Fehlerpaket entspricht, als dritten Zeitpunkt; und
Bestimmen (S304) einer Zeitdifferenz zwischen dem vierten Zeitpunkt und dem dritten Zeitpunkt als zweite Netzwerkverzögerung.

## Revendications

1. Procédé implémenté par un ou plusieurs dispositifs informatiques, le procédé comprenant les étapes consistant à :
déterminer (S101) un premier retard réseau entre un serveur et un terminal qui établit une connexion à Protocole de Commande de Transmission, TCP, avec le serveur en utilisant une adresse à Protocole Internet, IP, en tant qu'adresse IP d'utilisateur ;
déterminer (S102) un second retard réseau en utilisant l'adresse IP d'utilisateur reçue sur le serveur pour établir la connexion TCP, le second retard réseau étant entre le serveur et un routeur qui est à un pas avant l'adresse IP d'utilisateur reçue sur le serveur, dans lequel l'adresse IP d'utilisateur reçue sur le serveur pour établir la connexion TCP est utilisée en tant qu'adresse cible dans une série de paquets de détection ayant des temps incrémentiels à vivre construits et envoyés par le serveur ;
déterminer (S103) si un rapport entre le premier retard réseau et le second retard réseau est supérieur à un seuil ; et
identifier (S104, S105) l'adresse IP d'utilisateur en tant qu'adresse IP proxy ou adresse IP non-proxy sur la base d'un résultat de l'étape consistant à déterminer si le rapport entre le premier retard réseau et le second retard réseau est supérieur au seuil.

2. Procédé selon la revendication 1, dans lequel l'identification de l'adresse IP d'utilisateur en tant qu'adresse IP proxy ou adresse IP non-proxy sur la base d'un résultat de l'étape consistant à déterminer si le rapport entre le premier retard réseau et le second retard réseau est supérieur au seuil comprend :
a) l'identification (S104) de l'adresse IP d'utilisateur en tant qu'adresse IP proxy en réponse à la détermination que le rapport entre le premier retard réseau et le second retard réseau est supérieur au seuil ; ou
b) l'identification (S105) de l'adresse IP d'utilisateur en tant qu'adresse IP non-proxy en réponse à la détermination que le rapport entre le premier retard réseau et le second retard réseau est inférieur ou égal au seuil.

3. Procédé selon la revendication 1 ou la revendication 2, dans lequel la détermination (S101) du premier retard réseau comprend les étapes consistant à :
a) déterminer une différence de temps entre un temps d'envoi d'un paquet SYN-ACK au terminal et un temps de réception d'un paquet ACK en provenance du terminal en tant que premier retard réseau ; ou
b) enregistrer (S201) un premier instant d'envoi du paquet SYN-ACK au terminal ;
enregistrer (S202) un deuxième instant de réception du paquet ACK en provenance du terminal ; et
déterminer (S203) une différence de temps entre le deuxième instant et le premier instant en tant que premier retard réseau.

4. Procédé selon l'une quelconque des revendications précédentes, dans lequel la détermination (S102) du second retard réseau comprend les étapes consistant à :
a) déterminer une différence de temps entre un temps de réception d'un paquet d'erreur à protocole de message de commande sur Internet, ICMP, provenant du routeur qui est à un pas avant l'adresse IP d'utilisateur et un temps d'envoi d'un paquet de détection qui correspond au paquet d'erreur ICMP en tant second retard réseau ; ou
b) enregistrer (S301) un temps d'envoi de chaque paquet de détection dans la série de paquets de détection ;
enregistrer (S302) un quatrième instant de réception d'un paquet d'erreur à protocole de message de commande sur Internet, ICMP, provenant du routeur qui est à un pas avant l'adresse IP d'utilisateur ;
définir (S303) le temps d'envoi d'un paquet de détection qui correspond au paquet d'erreur ICMP en tant que troisième instant ; et
déterminer (S304) une différence de temps entre le quatrième instant et le troisième instant en tant que second retard réseau.

5. Appareil (600) d'identification d'une adresse IP proxy, comprenant :
un ou plusieurs processeurs (601) ;
une mémoire (603) ;
un premier module de détermination (607) stocké dans la mémoire et exécutable par les un ou plusieurs processeurs, le premier module de détermination (607) étant configuré pour, lorsqu'il est exécuté par les un ou plusieurs processeurs, déterminer un premier retard réseau entre un serveur et un terminal qui établit une connexion à Protocole de Commande de Transmission, TCP, avec le serveur en utilisant une adresse à Protocole Internet, IP, en tant qu'adresse IP d'utilisateur ;
un second module de détermination (608) stocké dans la mémoire et exécutable par les un ou plusieurs processeurs, le second module de détermination (608) étant configuré pour, lorsqu'il est exécuté par les un ou plusieurs processeurs, déterminer un second retard réseau en utilisant l'adresse IP d'utilisateur reçue sur le serveur pour établir la connexion TCP, le second retard réseau étant entre le serveur et un routeur qui est à un pas avant l'adresse IP d'utilisateur reçue sur le serveur, dans lequel l'adresse IP d'utilisateur reçue sur le serveur pour établir la connexion TCP est utilisée en tant qu'adresse cible dans une série de paquets de détection ayant des temps incrémentiels à vivre construits et envoyés par le serveur ;
un module de décision (609) stocké dans la mémoire et exécutable par les un ou plusieurs processeurs, le module de décision (609) étant configuré pour, lorsqu'il est exécuté par les un ou plusieurs processeurs, déterminer si un rapport entre le premier retard réseau et le second retard réseau est supérieur à un seuil ; et
un module d'identification (610) stocké dans la mémoire et exécutable par les un ou plusieurs processeurs, le module d'identification (610) étant configuré pour, lorsqu'il est exécuté par les un ou plusieurs processeurs, identifier l'adresse IP d'utilisateur en tant qu'adresse IP proxy ou adresse IP non-proxy sur la base d'un résultat de l'étape consistant à déterminer si le rapport entre le premier retard réseau et le second retard réseau est supérieur au seuil.

6. Appareil selon la revendication 5, dans lequel le module d'identification (610) est configuré pour, lorsqu'il est exécuté par les un ou plusieurs processeurs, identifier l'adresse IP d'utilisateur :
a) en tant qu'adresse IP proxy en réponse à la détermination que le rapport entre le premier retard réseau et le second retard réseau est supérieur au seuil ; ou
b) en tant qu'adresse IP non-proxy en réponse à la détermination que le rapport entre le premier retard réseau et le second retard réseau est inférieur ou égal au seuil.

7. Appareil selon la revendication 5 ou 6, dans lequel le premier module de détermination (607) est en outre configuré pour, lorsqu'il est exécuté par les un ou plusieurs processeurs, déterminer une différence de temps entre un temps d'envoi d'un paquet SYN-ACK au terminal et un temps de réception d'un paquet ACK en provenance du terminal en tant que premier retard réseau.

8. Appareil selon l'une quelconque des revendications 5 à 7, dans lequel le premier module de détermination (607) comprend en outre :
un premier sous-module d'enregistrement (611) configuré pour, lorsqu'il est exécuté par les un ou plusieurs processeurs, enregistrer un premier instant d'envoi du paquet SYN-ACK au terminal ;
un deuxième sous-module d'enregistrement (612) configuré pour, lorsqu'il est exécuté par les un ou plusieurs processeurs, enregistrer un deuxième instant de réception du paquet ACK en provenance du terminal ; et
un premier sous-module de détermination (613) configuré pour, lorsqu'il est exécuté par les un ou plusieurs processeurs, déterminer une différence de temps entre le deuxième instant et le premier instant en tant que premier retard réseau.

9. Appareil selon l'une quelconque des revendications 5 à 8, dans lequel le second module de détermination (608) est en outre configuré pour, lorsqu'il est exécuté par les un ou plusieurs processeurs, déterminer une différence de temps entre un temps de réception d'un paquet d'erreur à protocole de message de commande sur Internet, ICMP, provenant du routeur qui est à un pas avant l'adresse IP et un temps d'envoi d'un paquet de détection qui correspond au paquet d'erreur ICMP dans la série de Les paquets de détection en tant que second retard réseau entre le serveur et le routeur qui est à un pas avant l'adresse IP.

10. Appareil selon l'une quelconque des revendications 5 à 9, dans lequel le second module de détermination (608) comprend en outre :
un troisième sous-module d'enregistrement (614) configuré pour, lorsqu'il est exécuté par les un ou plusieurs processeurs, enregistrer un temps d'envoi de chaque paquet de détection dans la série de paquets de détection ;
un quatrième sous-module d'enregistrement (615) configuré pour, lorsqu'il est exécuté par les un ou plusieurs processeurs, enregistrer un quatrième instant de réception d'un paquet d'erreur à protocole de message de commande sur Internet, ICMP, provenant du routeur qui est à un pas avant l'adresse IP ;
un premier sous-module de définition (616) configuré pour, lorsqu'il est exécuté par les un ou plusieurs processeurs, définir le temps d'envoi du paquet de détection qui correspond au paquet d'erreur ICMP dans la série de paquets de détection en tant que troisième instant ; et
un second sous-module de détermination (617) configuré pour, lorsqu'il est exécuté par les un ou plusieurs processeurs, déterminer une différence de temps entre le quatrième instant et le troisième instant en tant que second retard réseau.

11. Un ou plusieurs supports lisibles par ordinateur stockant des instructions exécutables qui, lorsqu'elles sont exécutées par un ou plusieurs processeurs, amènent les un ou plusieurs processeurs à effectuer des actes consistant à :
déterminer (S101) un premier retard réseau entre un serveur et un terminal qui établit une connexion à Protocole de Commande de Transmission, TCP, avec le serveur en utilisant une adresse à Protocole Internet (IP) en tant qu'adresse IP d'utilisateur ;
déterminer (S102) un second retard réseau en utilisant l'adresse IP d'utilisateur reçue sur le serveur pour établir la connexion TCP, le second retard réseau étant entre le serveur et un routeur qui est à un pas avant l'adresse IP d'utilisateur reçue sur le serveur, dans lequel l'adresse IP d'utilisateur reçue sur le serveur pour établir la connexion TCP est utilisée en tant qu'adresse cible dans une série de paquets de détection ayant des temps incrémentiels à vivre construits et envoyés par le serveur ;
déterminer (S103) si un rapport entre le premier retard réseau et le second retard réseau est supérieur à un seuil ; et
identifier (S104, S105) l'adresse IP d'utilisateur en tant qu'adresse IP proxy en réponse à la détermination que le rapport entre le premier retard réseau et le second retard réseau est supérieur au seuil.

12. Un ou plusieurs supports lisibles par ordinateur selon la revendication 11, dans lesquels la détermination (S101) du premier retard réseau comprend la détermination d'une différence de temps entre un temps d'envoi d'un paquet SYN-ACK au terminal et un temps de réception d'un paquet ACK en provenance du terminal en tant que premier retard réseau.

13. Un ou plusieurs supports lisibles par ordinateur selon la revendication 11 ou la revendication 12, dans lesquels la détermination (S101) du premier retard réseau comprend :
l'enregistrement (S201) d'un premier instant d'envoi du paquet SYN-ACK au terminal ;
l'enregistrement (S202) d'un deuxième instant de réception du paquet ACK en provenance du terminal ; et
la détermination (S203) d'une différence de temps entre le deuxième instant et le premier instant en tant que premier retard réseau.

14. Un ou plusieurs supports lisibles par ordinateur selon l'une quelconque des revendications 11 à 13, dans lesquels la détermination (S102) du second retard réseau comprend la détermination d'une différence de temps entre un temps de réception d'un paquet d'erreur à protocole de message de commande sur Internet, ICMP, provenant du routeur qui est à un pas avant l'adresse IP d'utilisateur et un temps d'envoi d'un paquet de détection qui correspond au paquet d'erreur ICMP en tant que second retard réseau, dans lequel la série de paquets de détection comprend le paquet d'erreur ICMP.

15. Un ou plusieurs supports lisibles par ordinateur selon l'une quelconque des revendications 11 à 13, dans lesquels la détermination (S102) du second retard réseau comprend :
l'enregistrement (S301) d'un temps d'envoi de chaque paquet de détection dans la série de paquets de détection ;
l'enregistrement (S302) d'un quatrième instant de réception d'un paquet d'erreur à protocole de message de commande sur Internet, ICMP, provenant du routeur qui est à un pas avant l'adresse IP d'utilisateur ;
la définition (S303) du temps d'envoi d'un paquet de détection qui correspond au paquet d'erreur ICMP en tant que troisième instant ; et
la détermination (S304) d'une différence de temps entre le quatrième instant et le troisième instant en tant que second retard de réseau.
